# EUROPEAN PATENT APPLICATION

(11) **EP 4 364 571 A1**
(43) Date of publication of application: **08.05.2024**
(21) Application number: 21947733.8
(22) Date of filing: 15.07.2021
(51) Int. Cl.: A01N 43/90, A01P 13/00

(54) **HERBICIDE COMPOSITION, AND PREPARATION METHOD THEREFOR AND APPLICATION METHOD THEREOF**

(30) Priority: 28.06.2021 CN 202110717279
(71) Applicant: Max (Rudong) Chemicals Co., Ltd., Jiangsu 226400 (CN)
(72) Inventor: XU, Xianbo, Nantong, Jiangsu 226400 (CN); WANG, Furong, Nantong, Jiangsu 226400 (CN); CHEN, Bangchi, Nantong, Jiangsu 226400 (CN); HAN, Jin, Nantong, Jiangsu 226400 (CN); XU, Xiaoyan, Nantong, Jiangsu 226400 (CN); ZHANG, Zhen, Nantong, Jiangsu 226400 (CN); MU, Haiping, Nantong, Jiangsu 226400 (CN)
(74) Representative: Rogers, Alex Lee
(86) International application number: PCT/CN2021/106601
(87) International publication number: WO 2023/272790

(57) **Abstract**

The present disclosure provides a herbicide composition and a preparation method and an use method thereof, and relates to the technical field of herbicides. The herbicide composition includes pinoxaden and a cyclic lactone compound. The cyclic lactone compound is five-membered cyclic lactone and/or six-membered cyclic lactone. The herbicide composition solves the technical problems of poor chemical stability and precipitation due to crystallization at low temperature of existing pinoxaden emulsifiable concentrate formulations. In the herbicide composition, the cyclic lactone compound is used in combination with the pinoxaden, such that not only the solubility of the pinoxaden is improved, but also a chemical stabilization effect of the pinoxaden is effectively improved, and the problems of precipitation due to crystallization at low temperature and chemical stability of the pinoxaden emulsifiable concentrate formulations are solved.

## Description

### CROSS-REFERENCE TO RELATED APPLICATIONS

The present disclosure claims the priority of a Chinese patent application No. 202110717279.5 entitled "HERBICIDE COMPOSITION AND PREPARATION METHOD AND USE METHOD THEREOF" filed to the Patent Office of the People's Republic of China on June 28, 2021, the entire contents of which are incorporated herein by reference.

### FIELD OF TECHNOLOGY

The present disclosure relates to the technical field of herbicides, in particular to a herbicide composition and a preparation method and an use method thereof.

### BACKGROUND

Pinoxaden, with a chemical name of 8-(2,6-diethyl-4-methylphenyl)-1,2,4,5-tetrahydro-7-oxo-7H-pyrazolo[1,2-d][1,4,5]oxadiazep in-9-yl-2,2-dimethylpropionate, has a CAS number of 243973-20-8. The pinoxaden is a phenylpyrazoline herbicide used for preventing and controlling weeds in crops. The pinoxaden is mainly used for preventing and removing annual grassy weeds in wheat and barley fields after germination, such as Alopecurus aequalis, Alopecurus japonicus, Avena fatua, ryegrass, Setaria viridis, Sclerochloa dura, Schoenoplectus trigueter and Polypogon fugax, which is suitable for cereals in the spring.

At present, emulsifiable concentrate is the main form of pinoxaden formulations. However, the pinoxaden emulsifiable concentrate formulations have the problems of poor chemical stability and precipitation due to crystallization at low temperature. The pinoxaden is easily decomposed or property is modified through hydrolysis or transesterification reaction, thereby the content is reduced. The usability and uniformity of the product are affected by precipitation due to crystallization at low temperature.

### SUMMARY

A first objective of the present disclosure is to provide a herbicide composition, so as to solve the technical problems of poor chemical stability and low-temperature precipitation of existing pinoxaden emulsifiable concentrate formulations.

The herbicide composition provided by the present disclosure includes the following components:
(a) pinoxaden; and
(b) a cyclic lactone compound, wherein the cyclic lactone compound is five-membered cyclic lactone and/or six-membered cyclic lactone.

Optionally, the cyclic lactone compound is selected from at least one of γ-butyrolactone, α-methyl-γ-butyrolactone, γ-caprolactone, δ-caprolactone, γ-valerolactone or δ-valerolactone, such as at least one of γ-butyrolactone, γ-caprolactone, δ-valerolactone or γ-valerolactone.

Optionally, the herbicide composition further includes the component: (c) a surfactant, wherein the surfactant includes at least one of a nonionic surfactant or an anionic surfactant.

Optionally, the surfactant includes at least one of fatty alcohol polyoxyethylene ether, fatty acid polyoxyethylene ester, alkylphenol polyoxyethylene ether, castor oil polyoxyethylene ether, an ethylene oxide-propylene oxide block copolymer, an alcohol alkoxylated compound, alkyl acrylate, alkylbenzene sulfonate, polyoxyethylene ether phosphate ester, polyoxyethylene ether phosphate, polyoxyethylene ether sulfate ester or polyoxyethylene ether phosphate.

Optionally, the herbicide composition further includes at least one of a solvent, a safener or another herbicide.

Optionally, the solvent includes at least one of aromatic hydrocarbon, vegetable oil, vegetable oil ester, carbonate, paraffin oil or a ketone solvent;
optionally, the safener includes at least one of cloquintocet-mexyl, fenclorim, benoxacor, mefenpyr-diethyl or isoxadifen-ethyl as well as their acids, salts or derivatives thereof;
and optionally, the another herbicide includes at least one of a triazolinone herbicide, a sulfonylurea herbicide, an aryl carboxylic acid herbicide, a propionate herbicide, a tripyrimidine herbicide, a cyclohexanedione oxime herbicide, a dinitroaniline herbicide or a pyridine carboxamide herbicide.

Optionally, the pinoxaden accounts for 0.5-50% of the mass of the herbicide composition, such as 3-30% or 5-20%.

Optionally, the cyclic lactone compound accounts for 1-99% of the mass of the herbicide composition, such as 5-50% or 20-40%.

A second objective of the present disclosure is to provide a method for preparing the herbicide composition. The method for preparing the herbicide composition includes the following step: uniformly mixing pinoxaden, a cyclic lactone compound, an optional surfactant, an optional solvent, an optional safener and an optional another herbicide to obtain the herbicide composition.

A third objective of the present disclosure is to provide a method for using the herbicide composition. The method for using the herbicide composition includes the following steps: diluting the herbicide composition provided according to the first objective of the present disclosure into water to form a sprayable solution, and using the sprayable solution to weeds or places thereof.

In the herbicide composition provided by the present disclosure, the cyclic lactone compound not only has excellent solubility for the pinoxaden, but also has distinct chemical stabilization effect on the pinoxaden, and the problems of precipitation due to crystallization at low temperature and chemical stability of pinoxaden emulsifiable concentrate formulations are solved.

The method for preparing the herbicide composition provided by the present disclosure is simple in process, easy and convenient to operate and amenable for large-scale production.

### DESCRIPTION OF THE EMBODIMENTS

Technical schemes of the present disclosure are clearly and completely described in combination with embodiments below. Obviously, the embodiments described are a part of the embodiments of the present disclosure, rather than all of the embodiments. Based on the embodiments in the present disclosure, all other embodiments obtained by persons of ordinary skill in the art without creative effort fall within the scope of protection of the present disclosure.

In a first aspect, the present disclosure provides a herbicide composition. The herbicide composition includes the following components:
(a) pinoxaden; and
(b) a cyclic lactone compound, wherein the cyclic lactone compound is five-membered cyclic lactone and/or six-membered cyclic lactone.

In the present disclosure, the five-membered cyclic lactone is an ester with a cyclic structure containing 5 atoms formed after esterification in an organic molecule containing both hydroxyl (-OH) and carboxyl (-COOH); and the six-membered cyclic lactone is an ester with a cyclic structure containing 6 atoms formed after esterification in an organic molecule containing both hydroxyl (-OH) and carboxyl (-COOH).

In the present disclosure, the cyclic lactone compound may be five-membered cyclic lactone, six-membered cyclic lactone or a combination of five-membered cyclic lactone and six-membered cyclic lactone.

In the herbicide composition provided by the present disclosure, the cyclic lactone compound not only has excellent solubility for the pinoxaden, but also has distinct chemical stabilization effect on the pinoxaden, and the problems of precipitation due to crystallization at low temperature and chemical stability of pinoxaden liquid formulations, especially emulsifiable concentrate formulations, are solved.

In one typical embodiment of the present disclosure, the cyclic lactone compound is selected from one or more of γ-butyrolactone, α-methyl-γ-butyrolactone, γ-caprolactone, δ-caprolactone, γ-valerolactone or δ-valerolactone. In particular, the cyclic lactone compound has a better chemical stabilization effect on the pinoxaden when selected from one or more of γ-butyrolactone, γ-caprolactone, δ-valerolactone or γ-valerolactone.

In one typical embodiment of the present disclosure, the herbicide composition further includes the component: (c) a surfactant, wherein the surfactant may include either one or more of nonionic surfactants or one or more of anionic surfactants, and may also include one or more of nonionic surfactants and one or more of anionic surfactants simultaneously.

The surfactant is added into the herbicide composition, such that the herbicide composition is dispersed in water conveniently to form a sprayable solution for use.

Typically, but not restrictively, the anionic surfactants include, but are not limited to, carboxylates, sulfonates, sulfates, sulfate esters or phosphates. The nonionic surfactants include, but are not limited to, polyoxyethylene derivatives, alkylolamides, polyol monofatty acid esters, alkyl amine oxides or N-alkylpyrrolidones.

In one or more exemplary embodiments, when the herbicide composition includes a surfactant, the surfactant is selected from one or more of fatty alcohol polyoxyethylene ether, fatty acid polyoxyethylene ester, alkylphenol polyoxyethylene ether, castor oil polyoxyethylene ether, an ethylene oxide-propylene oxide block copolymer, an alcohol alkoxylated compound, alkyl acrylate, alkylbenzene sulfonate, polyoxyethylene ether phosphate ester, polyoxyethylene ether phosphate, polyoxyethylene ether sulfate ester or polyoxyethylene ether phosphate.

In one typical embodiment of the present disclosure, the herbicide composition includes the following components: (a) pinoxaden, (b) a cyclic lactone compound and (c) an optional surfactant, and further includes one or more of a solvent, a safener or another herbicide.

Typically, but not restrictively, the solvent includes, but is not limited to, mixed solutions of one or more of aromatic hydrocarbon, vegetable oil, vegetable oil ester, carbonate, paraffin oil or a ketone solvent; and the safener includes, but is not limited to, one or more of cloquintocet-mexyl, fenclorim, benoxacor, mefenpyr-diethyl or isoxadifen-ethyl as well as their acids, salts or derivatives thereof.

In the present disclosure, the another herbicide is a herbicide other than the pinoxaden.

Typically, but not restrictively, the another herbicide includes, but is not limited to, one or more of a triazolinone herbicide, a sulfonylurea herbicide, an aryl carboxylic acid herbicide, a propionate herbicide, a tripyrimidine herbicide, a cyclohexanedione oxime herbicide, a dinitroaniline herbicide or a pyridine carboxamide herbicide.

In one or more exemplary embodiments, the triazolinone herbicide includes, but is not limited to, carfentrazone or sulfentrazone. The sulfonylurea herbicide includes, but is not limited to, tribenuron, metsulfuron, thifensulfuron, chlorsulfuron, mesosulfuron or tritosulfuron. The aryl carboxylic acid herbicide includes, but is not limited to, dicamba or clopyralid. The propionate herbicide includes, but is not limited to, clodinafop-propargyl, fenoxaprop-P-ethyl, diclofop-methyl or cyhalofop-butyl. A triazolopyrimidine herbicide includes, but is not limited to, florasulam, metosulam and flumetsulam. The cyclohexanedione oxime herbicide includes, but is not limited to, tralkoxydim. The dinitroaniline herbicide includes, but is not limited to, pendimethalin or trifluralin. The pyridine carboxamide herbicide includes, but is not limited to, diflufenican.

In one typical embodiment of the present disclosure, the herbicide composition has excellent chemical stability when the pinoxaden accounts for 0.5-50% of the mass of the herbicide composition. In particular, the herbicide composition has better chemical stability when the pinoxaden accounts for 3-30% of the mass of the herbicide composition. Especially, the herbicide composition has more distinct chemical stability when the pinoxaden accounts for 5-20% of the mass of the herbicide composition.

Typically, but not restrictively, the mass proportion of the pinoxaden in the herbicide composition is, for example, 0.5%, 1%, 2%, 5%, 8%, 10%, 12%, 15%, 18%, 20%, 22%, 25%, 28%, 30%, 35%, 40%, 45% or 50%.

In one typical embodiment of the present disclosure, the cyclic lactone compound can more effectively stabilize the pinoxaden when the cyclic lactone compound accounts for 1-99% of the mass of the herbicide composition. In particular, the cyclic lactone compound has better stability and solubility to the pinoxaden when the cyclic lactone compound accounts for 5-50% of the mass of the herbicide composition. Especially, the prepared herbicide composition has more obvious chemical stability when the cyclic lactone compound accounts for 20-40% of the mass of the herbicide composition.

Typically, but not restrictively, the mass proportion of the cyclic lactone compound in the herbicide composition is, for example, 1%, 2%, 5%, 8%, 10%, 15%, 20%, 25%, 30%, 35%, 40%, 45%, 50%, 60%, 70%, 80%, 90%, 95% or 99%.

Typically, but not restrictively, the mass proportion of the surfactant in the herbicide composition is, for example, 1%, 2%, 5%, 8%, 10%, 15%, 20%, 25%, 30%, 35%, 40%, 45% or 50%.

According to a second aspect of the present disclosure, the present disclosure provides a method for preparing the herbicide composition. The method for preparing the herbicide composition includes the following step: uniformly mixing pinoxaden, a cyclic lactone compound, an optional surfactant, an optional solvent, an optional safener and an optional another herbicide to obtain the herbicide composition.

The method for preparing the herbicide composition provided by the present disclosure is simple in process, easy and convenient to operate and amenable for large-scale production.

According to a third aspect of the present disclosure, the present disclosure provides a method for using the herbicide composition. The method for using the herbicide composition includes the following steps: diluting the herbicide composition provided according to the first aspect of the present disclosure into water to form a sprayable solution, and using the sprayable solution to weeds or places thereof.

In one or more exemplary embodiments, the pinoxaden is used in an amount of 30-60 g a i/ha when the herbicide composition is used.

Typically, but not restrictively, the use amount of the pinoxaden is 30, 35, 40, 45, 50, 55 or 60 g a i/ha.

In one or more exemplary embodiments, the herbicide composition may also be used in combination with a tank mix adjuvant to improve the efficacy of the herbicide composition at an action place, improve the adsorption and penetration of a herbicide solution and the like.

The tank mix adjuvant may be added into a herbicide barrel or a sprayer before use.

The tank mix adjuvant includes, but it not limited to, HASTEN (Vegetable oil methyl ester, purchased from VICCHEM).

In order to facilitate the technical schemes understood by persons skilled in the art, the technical schemes provided by the present disclosure are further described in combination with examples and comparative examples below. Contents in the examples and comparative examples are mass proportions.

Specifications and sources of raw materials used in the examples and comparative examples are as shown in Table 1 below, and raw materials not listed in Table 1 are purchased from the market.

**Table 1**

| Name | Category | Manufacturer |
|---|---|---|
| Atlas G5000 (ethylene oxide-propylene oxide block copolymer) | Nonionic surfactant | Croda |
| Calcium dodecyl benzene sulfonate | Anionic surfactant | Available in the market |
| Emulsogen EL 360 (castor oil polyoxyethylene ether) | Nonionic surfactant | Clarian |
| Solvesso 200ND (aromatic hydrocarbon) | Solvent | ExxonMobil |

### Example 1

The present example provides a herbicide composition liquid formulation. The herbicide composition liquid formulation includes: 10.5% of pinoxaden, 2.7% of cloquintocet-mexyl, 1% of Atlas G5000, 1% of calcium dodecyl benzene sulfonate, 1% of Emulsogen EL 360, 53.8% of Solvesso 200ND and 30% of γ-butyrolactone.

### Example 2

The present example provides a herbicide composition liquid formulation. The herbicide composition liquid formulation includes: 10.5% of pinoxaden, 2.7% of cloquintocet-mexyl, 1% of Atlas G5000, 1% of calcium dodecyl benzene sulfonate, 1% of Emulsogen EL 360, 53.8% of Solvesso 200ND and 30% of δ-valerolactone.

### Example 3

The present example provides a herbicide composition liquid formulation. The herbicide composition liquid formulation includes: 10.5% of pinoxaden, 2.7% of cloquintocet-mexyl, 1% of Atlas G5000, 1% of calcium dodecyl benzene sulfonate, 1% of Emulsogen EL 360, 53.8% of Solvesso 200ND and 30% of γ-valerolactone.

### Example 4

The present example provides a herbicide composition liquid formulation. The herbicide composition liquid formulation includes: 10.5% of pinoxaden, 2.7% of cloquintocet-mexyl, 1% of Atlas G5000, 1% of calcium dodecyl benzene sulfonate, 1% of Emulsogen EL 360 and 83.8% of γ-valerolactone.

### Example 5

The present example provides a herbicide composition liquid formulation. Different from Example 3, the herbicide composition liquid formulation includes 5% of pinoxaden, 69.3% of Solvesso 200ND and 20% of γ-valerolactone. The contents of other raw materials are the same as those in Example 3, which are not repeated herein.

### Example 6

The present example provides a herbicide composition liquid formulation. Different from Example 3, the herbicide composition liquid formulation includes 15% of pinoxaden, 44.3% of Solvesso 200ND and 35% of γ-butyrolactone. The contents of other raw materials are the same as those in Example 3, which are not repeated herein.

### Example 7

The present example provides a herbicide composition liquid formulation. Different from Example 3, the herbicide composition liquid formulation includes 25% of pinoxaden, 4.3% of Solvesso 200ND and 65% of γ-valerolactone. The contents of other raw materials are the same as those in Example 3, which are not repeated herein.

### Example 8

The present example provides a herbicide composition liquid formulation. Different from Example 3, the herbicide composition liquid formulation includes 3% of pinoxaden, 86.3% of Solvesso 200ND and 5% of γ-butyrolactone. The contents of other raw materials are the same as those in Example 3, which are not repeated herein.

### Example 9

The present example provides a herbicide composition liquid formulation. The herbicide composition liquid formulation includes: 0.5% of pinoxaden, 99% of γ-valerolactone and 0.5% of Emulsogen EL 360.

### Example 10

The present example provides a herbicide composition liquid formulation. The herbicide composition liquid formulation includes: 10.5% of pinoxaden and 89.5% of γ-valerolactone.

The herbicide composition liquid formulations provided in Examples 1-10 are prepared in the following step: uniformly mixing pinoxaden, cyclic lactone, an optional nonionic surfactant, an optional anionic surfactant and an optional solvent to obtain the herbicide composition liquid formulations, respectively.

### Comparative Example 1

The present comparative example provides a herbicide composition liquid formulation. Different from Example 3, the γ-valerolactone is replaced with methyl caprylate. The contents of other raw materials are the same as those in Example 3.

### Comparative Example 2

The present comparative example provides a herbicide composition liquid formulation. Different from Example 3, the γ-valerolactone is replaced with cyclohexanone. The contents of other raw materials are the same as those in Example 3.

### Comparative Example 3

The present comparative example provides a herbicide composition liquid formulation. Different from Example 3, the γ-valerolactone is replaced with acetophenone. The contents of other raw materials are the same as those in Example 3.

### Comparative Example 4

The present comparative example provides a herbicide composition liquid formulation. Different from Example 3, the γ-valerolactone is replaced with N-methylpyrrolidone. The contents of other raw materials are the same as those in Example 3.

### Comparative Example 5

The present comparative example provides a herbicide composition liquid formulation. Different from Example 3, the γ-valerolactone is replaced with N-butylpyrrolidone. The contents of other raw materials are the same as those in Example 3.

### Comparative Example 6

The present comparative example provides a herbicide composition liquid formulation. Different from Example 3, the γ-valerolactone is replaced with tetrahydrofurfuryl alcohol. The contents of other raw materials are the same as those in

### Example 3.

Methods for preparing the herbicide composition liquid formulations provided in Comparative Examples 1-6 are the same as a method for preparing the herbicide composition liquid formulation provided in Example 3, which are not repeated therein.

### Comparative Example 7

Comparative Example 7 provides a herbicide emulsifiable concentrate formulation. The herbicide emulsifiable concentrate formulation is an "Axial" emulsifiable concentrate containing 100 g/L of pinoxaden purchased from Syngenta.

### Test Example 1

The heat storage stability and low-temperature stability of the herbicide composition liquid formulations provided in Examples 1-10 and Comparative Examples 1-6 were tested according to analytical methods CIPAC MT 46.3 and CIPAC MT 39.3 approved by the Collaborative International Pesticides Analytical Council (CIPAC). Results are as shown in Table 2. A method for testing the heat storage stability includes: sealing and placing the herbicide composition liquid formulations at a temperature of 54±2°C for 14 days, and detecting the content stability of samples. A method for testing the low-temperature stability includes: sealing and placing the herbicide composition liquid formulations at 0°C for 7 days, and detecting precipitate conditions of samples.

**Table 2**

| | Degradation rate of pinoxaden after heat storage (wt%) | Conditions of a low-temperature precipitate |
|---|---|---|
| Example 1 | 1.9 | Clear and transparent without a precipitate |
| Example 2 | 2.1 | Clear and transparent without a precipitate |
| Example 3 | 1.6 | Clear and transparent without a precipitate |
| Example 4 | 1.3 | Clear and transparent without a precipitate |
| Example 5 | 2.0 | Clear and transparent without a precipitate |
| Example 6 | 1.8 | Clear and transparent without a precipitate |
| Example 7 | 1.5 | Clear and transparent without a precipitate |
| Example 8 | 2.2 | Clear and transparent without a precipitate |
| Example 9 | 2.1 | Clear and transparent without a precipitate |
| Example 10 | 1.2 | Clear and transparent without a precipitate |
| Comparative Example 1 | 21.6 | Crystal precipitate |
| Comparative Example 2 | 9.6 | Clear and transparent without a precipitate |
| Comparative Example 3 | 7.9 | Crystal precipitate |
| Comparative Example 4 | 5.2 | Clear and transparent without a precipitate |
| Comparative Example 5 | 4.9 | Crystal precipitate |
| Comparative Example 6 | 3.5 | Clear and transparent without a precipitate |

### Test Example 2

In order to determine the herbicidal activity and safety of the herbicide composition liquid formulations provided in Examples 1-3 and the pinoxaden emulsifiable concentrate formulation provided in Comparative Example 7 to wheat, tests below were carried out. Test results are as shown in Table 3 below.

### Test steps are as follows.

(1) Under warm and humid conditions, weeds of Avena fatua L and Alopecurus aequalis were cultivated in standard soil, respectively. Samples were uniformly sprayed onto stems and leaves of test plants in a 4- to 5-leaf stage by a walking spray tower (HCL-2000), wherein the samples were used at a dose of 30 g a.i./ha, and water was used in an amount of 400 L/ha. After use for 20 days, growth of the plants was evaluated (100% indicates complete death of plants, and 0% indicates no toxic effect on plants).
(2) Under warm and humid conditions, wheat (Jiangmai 816) was cultivated in standard soil. Samples were uniformly sprayed onto stems and leaves of the wheat in a 3-leaf stage by a walking spray tower (HCL-2000), wherein the samples were used at a dose of 60 g a.i./ha and 90 g a.i./ha, respectively, and water was used in an amount of 400 L/ha. After use for 20 days, growth of the wheat was evaluated (100% indicates complete death of plants, and 0% indicates no toxic effect on plants).

The above samples not only include the herbicide liquid formulations provided in Examples 1-3 and the pinoxaden emulsifiable concentrate formulation provided in Comparative Example 1, but also include samples obtained by using the formulations provided in Examples 1-3 and Comparative Example 1 in combination with a tank mix adjuvant, respectively, so as to improve the efficacy, wherein the tank mix adjuvant is HASTEN (vegetable oil methyl ester, purchased from VICCHEM).

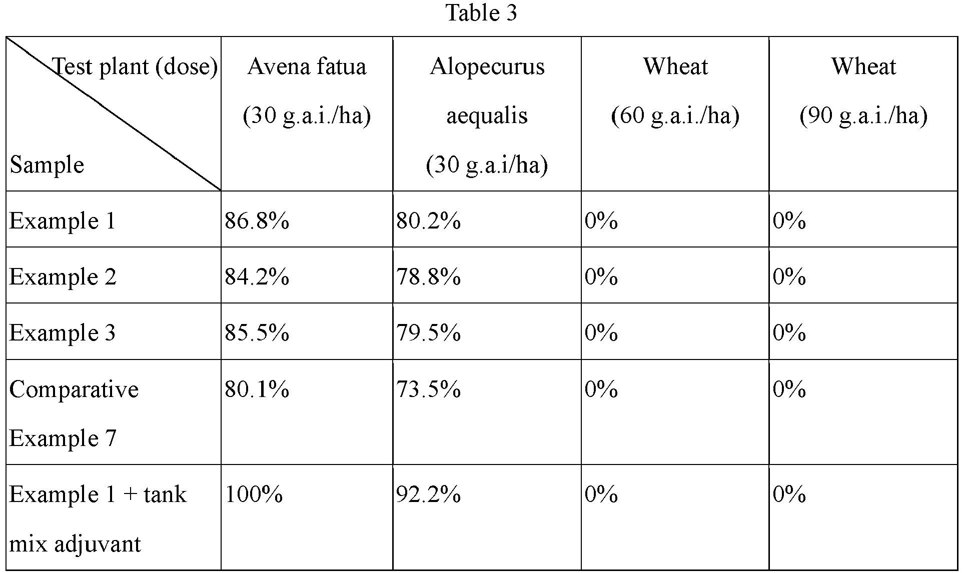

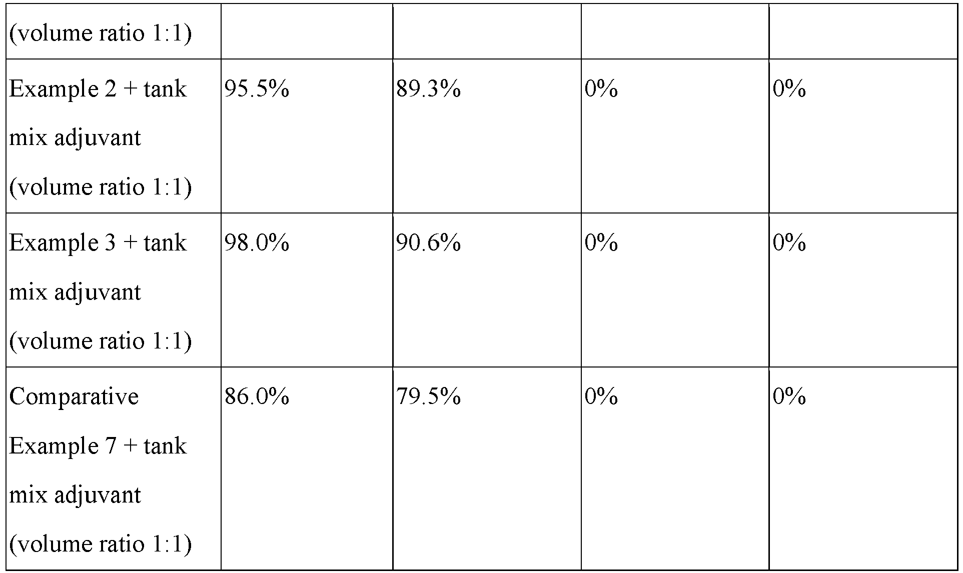

It can be seen from Table 3 that the herbicide compositions provided in Examples 1-3 have good efficacy against weeds at lower doses, and especially have a better weed control effect when used in combination with the tank mix adjuvant.

In addition, it can also be seen from Table 3 that the herbicide compositions provided in Examples 1-3 still have good safety to the wheat even at higher doses.

Finally, it is to be noted that the above embodiments are used only to illustrate the technical schemes of the present disclosure, rather than to limit the present disclosure. Although the present disclosure is described in detail by reference to the foregoing embodiments, it is to be understood by persons of ordinary skill in the art that modifications of the technical schemes described in the foregoing embodiments can still be made, or equivalent substitutions of some or all of technical features can be made; and such modifications or substitutions are obtained without making the essence of the corresponding technical schemes departed from the scope of the technical schemes of the embodiments of the present disclosure.

## Claims

1. A herbicide composition, comprising the following components:
(a) pinoxaden; and
(b) a cyclic lactone compound, wherein the cyclic lactone compound is five-membered cyclic lactone and/or six-membered cyclic lactone.

2. The herbicide composition according to claim 1, **characterized in that** the cyclic lactone compound is selected from at least one of γ-butyrolactone, α-methyl-γ-butyrolactone, γ-caprolactone, δ-caprolactone, γ-valerolactone or δ-valerolactone, and is preferably at least one of γ-butyrolactone, γ-caprolactone, δ-valerolactone or γ-valerolactone.

3. The herbicide composition according to claim 1, **characterized in that** the herbicide composition further comprises the component: (c) a surfactant, wherein the surfactant comprises at least one of a nonionic surfactant or an anionic surfactant.

4. The herbicide composition according to claim 3, **characterized in that** the surfactant comprises at least one of fatty alcohol polyoxyethylene ether, fatty acid polyoxyethylene ester, alkylphenol polyoxyethylene ether, castor oil polyoxyethylene ether, an ethylene oxide-propylene oxide block copolymer, an alcohol alkoxy compound, alkyl acrylate, alkylbenzene sulfonate, polyoxyethylene ether phosphate ester, polyoxyethylene ether phosphate, polyoxyethylene ether sulfate ester or polyoxyethylene ether phosphate.

5. The herbicide composition according to claim 1, **characterized in that** the herbicide composition further comprises at least one of a solvent, a safener or another herbicide.

6. The herbicide composition according to claim 5, **characterized in that** the solvent comprises at least one of aromatic hydrocarbon, vegetable oil, vegetable oil ester, carbonate, paraffin oil or a ketone solvent;
preferably, the safener comprises at least one of cloquintocet-mexyl, fenclorim, benoxacor, mefenpyr-diethyl or isoxadifen-ethyl as well as acids, salts or derivatives thereof;
and preferably, the another herbicide comprises at least one of a triazolinone herbicide, a sulfonylurea herbicide, an aryl carboxylic acid herbicide, a propionate herbicide, a tripyrimidine herbicide, a cyclohexanedione oxime herbicide, a dinitroaniline herbicide or a pyridine carboxamide herbicide.

7. The herbicide composition according to any one of claims 1-6, **characterized in that** the pinoxaden accounts for 0.5-50% of the mass of the herbicide composition, preferably 3-30%, and more preferably 5-20%.

8. The herbicide composition according to any one of claims 1-6, **characterized in that** the cyclic lactone compound accounts for 1-99% of the mass of the herbicide composition, preferably 5-50%, and more preferably 20-40%.

9. A method for preparing the herbicide composition according to any one of claims 1-8, **characterized by** comprising the following step: uniformly mixing pinoxaden, a cyclic lactone compound, an optional surfactant, an optional solvent, an optional safener and an optional another herbicide to obtain the herbicide composition.

10. A method for using the herbicide composition according to any one of claims 1-8, **characterized by** comprising the following steps: diluting the herbicide composition according to any one of claims 1-8 into water to form a sprayable solution, and using the sprayable solution to weeds or places thereof.
